# EUROPÄISCHE PATENTSCHRIFT

(11) **EP 2 956 279 B1**
(45) Veröffentlichungstag und Bekanntmachung des Hinweises auf die Patenterteilung: **25.10.2017**
(21) Anmeldenummer: 14708206.9
(22) Anmeldetag: 12.02.2014
(51) Int. Cl.: B27D 1/04, B27D 1/08, B32B 5/02, B32B 7/12, B32B 21/04, B32B 21/08, B32B 21/13, B32B 21/14

(54) **BIEGEHOLZLAMINAT SOWIE DARAUS HERGESTELLTES GEBOGENES FORMTEIL**
BENDING WOOD LAMINATE AND BENT SHAPED PART PRODUCED THEREFROM
STRATIFIÉ EN BOIS CINTRABLE ET PIÈCE FAÇONNÉE CINTRÉE PRODUITE À PARTIR DE CELUI-CI

(30) Priorität: 13.02.2013 DE 102013101428
(43) Veröffentlichungstag der Anmeldung: 23.12.2015
(73) Patentinhaber: Airex AG, 5643 Sins (CH)
(72) Erfinder: AESCHLIMANN, Peter, CH-8037 Zürich (CH)
(74) Vertreter: Wagner, Kilian
(86) Internationale Anmeldenummer: PCT/EP2014/052760
(87) Internationale Veröffentlichungsnummer: WO 2014/124991

(56) Entgegenhaltungen:
- WO-A1-03/103909
- WO-A1-2011/096886
- DE-A1- 1 528 097
- GB-A- 572 267
- GB-A- 797 026
- US-A- 3 437 547
- US-A- 4 204 900
- US-A- 4 461 666
- US-A1- 2008 152 862

## Beschreibung

Die Erfindung betrifft ein biegbares (bzw. nach Verarbeitung zu einem Formteil gebogenes) Biegeholzlaminat gemäß dem Oberbegriff des Anspruchs 1. Ein solches Biegeholzlaminat ist aus der US 2008/152862 A1 bekannt. Die fachfremde WO 2009/138197 A1 beschäftigt sich mit biegesteifen Formkörpern aus Balsaholz, wobei es als Zwischenschritt zur Herstellung eines solchen Formkörpers bekannt ist, einen biegesteifen Block aus einer Vielzahl von übereinander angeordneten Schälfurnieren herzustellen und diesen zu Hirnholzplatten zu verarbeiten.

Aus der DE 201 08 858 U1 ist eine biegesteife Möbelbauplatte bekannt, die als Zwischen- bzw. Kernschicht eine im Vergleich zu den weiteren Schichten sehr dicke Balsaholzplatte aufweist, deren Fasern senkrecht zur Flächenerstreckung der Platte ausgerichtet sind, wodurch eine steife Leichtbauplatte für Land- und Luftfahrzeuge erhalten wird. Bei der vorgenannten Balsaholz-Zwischenschicht handelt es sich um Massivholz auf dessen Außenseiten zu Dekorationszwecken Furnierholzlagen vorgesehen sein können.

Die ebenfalls fachfremde EP 2 119 540 A1 beschäftigt sich mit starren Formkörpern aus Balsahölzern, wobei der Formkörper aus einer Vielzahl kleiner Balsaholzabschnitte ausgebildet ist, die über zwischen sich befindlichen Klebstoff miteinander verbunden sind. Der bekannte Formkörper ist nicht biegbar.

Aus der GB 797 026 ist ein zweischichtiger Balsaholzaufbau zur Herstellung von Flüssiggastanks bekannt. Zum Einsatz kommen zwei Schichten von Balsa-Massivhölzern, deren Faserrichtung senkrecht zueinander orientiert ist. Mit der bekannten Zweischichtanordnung können nur sehr große Biegeradien, wie diese bei Flüssiggastanks auftreten, hergestellt werden.

Neben den vorgenannten Balsaholzanwendungen sind Biegehölzer, klassisch als Biegesperrholz bezeichnet, hinlänglich bekannt. Die bekannten Biegehölzer werden häufig als Mittelschichtaufbau von gebogenen Formteilen verwendet, wobei es für viele Anwendungen, z.B. im Möbelbau zur Erzielung einer ausreichenden Wandstärke notwendig ist, eine Vielzahl von zunächst voneinander separaten, jeweils mehrschichtigen Biegesperrhölzern miteinander zu verkleben, was jedoch in vielfältiger Hinsicht von Nachteil ist. Zum einen ist der Herstellungsprozess des resultierenden gebogenen Formteils aufwändiger, da viele Verfahrensschritte notwendig sind. Zum anderen führt die Direktverklebung von Biegesperrhölzern in der Praxis ohne Absperrung zwischen den Biegesperrhölzern zu einer vergleichsweise wenig steifen Verbindung.

Ferner sind den mit bekannten Biegehölzern realisierbaren minimalen Biegeradien vergleichsweise enge Grenzen gesetzt, so dass es bei Realisierung dieser geringen Biegeradien zu einer Zerstörung des Biegeholzes kommen würde oder gegebenenfalls mehrere sehr dünne Sperrholzschichten eingesetzt werden müssen.

Auch sind die bei bestehenden Hölzern, insbesondere mit vergleichsweise großer Dicke beim Biegevorgang wirkenden großen Rückstellkräfte von Nachteil, da sie eine Weiterverarbeitung zu gebogenen Formteilen erschweren.

Die US 2008/152862 A1 beschreibt ein biegbares Biegeholzlaminat mit einer Zwischenschicht und zwei Außenholzschichten, wobei die Zwischenschicht als richtungsorientierte Holzschicht ausgebildet ist. Zum weiteren Stand der Technik werden die WO 2011/096886 A1 sowie die US 4,204,900 A und die US 2,452,226 A genannt. Letztgenanntes Dokument offenbart das Vorhandensein von Schälrissen an der Außenseite eines Laminates.
Ausgehend von dem vorgenannten Stand der Technik liegt der Erfindung die Aufgabe zugrunde, ein Biegeholzlaminat (Biegeholz) anzugeben, welches sich zum einen dadurch auszeichnet, dass es auf einfache Weise in größeren Dicken herstellbar ist als bekannte Biegesperrhölzer und darüber hinaus zerstörungsfrei sehr geringe Biegeradien realisierbar sind. Dabei soll die Verarbeitbarkeit möglichst einfach sein. Ferner besteht die Aufgabe darin, ein aus einem derartigen Biegeholzlaminat hergestelltes Formteil anzugeben.
Diese Aufgabe wird hinsichtlich des Biegeholzlaminates mit den Merkmalen des Anspruchs 1 und hinsichtlich des Formteils mit den Merkmalen des Anspruchs 10 gelöst. Vorteilhafte Weiterbildungen der Erfindung sind in den Unteransprüchen angegeben.

Der Erfindung liegt der Gedanke zugrunde beide auf den parallelen Flächenseiten der insbesondere eine Mittelschicht bildenden Zwischenschicht angeordneten Außenholzschichten aus Balsa-Schälfurnierholz auszubilden und dadurch ein Biegeholzlaminat zu erhalten, welches die Nachteile des Standes der Technik überwindet. Erfindungsgemäß sind beide Außenholzschichten aus Balsa-Schälfurnierholz ausgebildet sind, welches durch Schälen von Rundholz erhalten wird. Dabei wird der Balsa-Baumstamm bevorzugt ohne Vorbehandlung, d.h. nass bzw. feucht aus dem Wald oder alternativ, beispielsweise durch Dämpfen oder Erhitzen im Wasserbad vorbehandeltes Rundholz relativ zu einem Schälmesser rotiert, wobei bevorzugt auf der von dem Schälmesser abgewandten Seite geeignet ein Gegendruck erzeugt wird. Erfindungsgemäß weist dabei das Furnierholz von dem Schälprozess herrührende, insbesondere sichelförmige Schälrisse (insbesondere Haarrisse) auf, die auf der dem Schälmesser zugewandten Seite in meist regelmäßigen Abständen beim Schälprozess durch die Biegebeanspruchung des Furnierblattes entstehen.

Wie erwähnt, ist es erfindungsgemäß vorgesehen, dass es sich bei dem zum Einsatz kommenden Balsa-Furnierholz um Schälfurnierholz, alternativ um gemessertes Furnierholz handelt, welches auf der bei dessen Herstellung dem Messer zugewandten Seite Schälrisse aufweist, wobei beide Außenholzschichten derart angeordnet sind, dass die Schälrisse von der Zwischenschicht und damit auch von der gegenüberliegenden Außenholzschicht abgewandt sind, d.h. auf einer Außenseite vorgesehen sind. Eine derartige Anordnung der Außenholzschicht auf einer bei einem Biegevorgang inneren Biegeholzlaminatseite ermöglicht eine gute Kompression des Holzes in den Spaltbereichen, wodurch geringe Biegeradien unterstützt werden. Eine Anordnung der Schälrisse an der Außenseite auf einer nach einem Biegevorgang äußeren Biegeholzlaminatseite ermöglicht ein zerstörungsfreies Aufbiegen in den Spaltbereichen, da in diesem Fall beim Biegen der Schälrissquerschnitt vergrößert wird. Insgesamt erhöhen derartig angeordnete Schälrisse die Flexibilität bzw. gleichmäßige Formbarkeit des erfindungsgemäßen Biegeholzlaminates, insbesondere auch bei dicken Biegeholzlaminat-Ausführungen mit einer Dicke von mehr als 12mm oder 16mm. Es ist für den erfindungsgemäßen Fall, dass auf beiden Seiten der Zwischenschicht eine Außenholzschicht mit Schälrissen vorgesehen ist, bevorzugt, wenn die Schälrisse der beiden Seiten in einer gemeinsamen Richtung verlaufen, d.h. parallel zueinander ausgerichtet sind.
Die Verwendung von zwei Außenholzschichten aus Balsa-Schälfurnierholz führt zu einem Biegeholzlaminat mit völlig neuen Möglichkeiten. So können die aus Balsa-Schälfurnierholz ausgebildeten Außenholzschichten vergleichsweise dick ausgebildet werden, da sich Balsaholz aufgrund seiner speziellen Eigenschaften, insbesondere aufgrund seiner geringen Dichte und der guten Biegeeigenschaften hervorragend zur Herstellung derartiger dicker Furnierhölzer (Furnierplatten) eignet. Ferner lässt sich ein erfindungsgemäßes Biegeholzlaminat hervorragend zu einem Formteil weiterverarbeiten, da beim Biegevorgang wesentlich geringere Rückstellkräfte entstehen als bei bekannten Biegesperrhölzern. Darüber hinaus ist Balsa-Schälfurnierholz, insbesondere wenn dieses die vorerwähnten Schälrisse aufweist, besonders flexibel und kann mit sehr geringen Biegeradien gebogen werden. Da nun das Biegeholzlaminat aufgrund des Einsatzes **von zwei** aus Balsa-Schälfurnierholz ausgebildeten Außenholzschichten eine vergleichsweise große Dicke aufweisen kann, ist es nicht mehr notwendig, mehrere Biegeholzlaminate jeweils aufweisend eine Zwischenschicht und zwei Außenholzschichten miteinander zu verkleben, um eine ausreichend dicke Kernschicht für ein gebogenes Formteil mit den damit verbundenen Nachteilen zu erhalten, sondern das gebogene Formteil umfasst in Richtung seiner Dickenerstreckung bevorzugt nur ein einziges erfindungsgemäßes Biegeholzlaminat, das auf mindestens einer Seite, insbesondere auf beiden Seiten, mit jeweils einer, insbesondere vergleichsweise starren bzw. versteifend wirkenden (noch weiter bevorzugt dekorativen), Deckschicht versehen ist.

Ein weiterer Vorteil eines nach dem Konzept der Erfindung ausgebildeten Biegeholzlaminates bzw. eines draus hergestellten Formteils besteht in den guten Wärmedämmeigenschaften aufgrund des Einsatzes mindestens einer Balsa-Schälfunierholzschicht.

Besonders vorteilhaft ist eine Ausführungsform, bei der die Zwischenschicht dünner ist als die beiden Außenholzschichten aus Balsa-Schälfurnierholz, um hierdurch optimale Biegeeigenschaften zu erzielen.

Ganz besonders bevorzugt ist eine Ausführungsform des erfindungsgemäßen Biegeholzlaminates, bei der neben der Zwischenschicht und den beiden, jeweils aus Balsa-Schälfurnierholz ausgebildeten, Außenholzschichten (abgesehen von ggf. vorgesehenen, später noch zu erläuternden Kleberschichten zwischen der Zwischenschicht und den Außenholzschichten) keine weiteren Schichten, insbesondere keine weiteren Holzschichten, vorhanden sind.

Um die Biegeeigenschaften gezielt zu beeinflussen ist in Weiterbildung der Erfindung mit Vorteil vorgesehen, dass an mindestens einer der beiden Außenholzschichten, insbesondere an beiden Außenholzschichten Einformungen, insbesondere Einschnitte oder Perforationen vorgesehen werden, die beispielsweise gezielt mit Hilfe von Schlitzmessern bzw. Stanzen vorgesehen werden können, indem diese das Balsa-Schälfurnierholz aufreißen bzw. (weiter) biegbar machen. Je nach Anzahl und Ausrichtung der Einformungen, insbesondere Schlitze kann es auch möglich sein, die Schälrisse der ersten und/oder zweiten Außenholzschicht auf einer der Zwischenschicht zugewandten Seite der Außenholzschicht vorzusehen, insbesondere dann, wenn die vorgenannten Einformungen auf einer von der Zwischenschicht abgewandten Flächenseite der jeweiligen Außenholzschicht angeordnet sind. Bevorzugt sind die Einformungen, insbesondere Einschnitte einer Außenholzschicht zumindest näherungsweise parallel zueinander orientiert, wobei es besonders bevorzugt ist, wenn diese parallel zu den Schälrissen derselben Außenholzschicht und/oder parallel zu etwaigen Einformungen der gegenüberliegenden Außenholzschicht angeordnet sind. Denkbar ist jedoch auch eine winklige Anordnung der Einformungen, insbesondere Einschnitte zu den Schälrissen der jeweiligen Außenholzschicht, wobei es bevorzugt ist, wenn die Einformungen einer Außenholzschicht parallel zu Einformungen der gegenüberliegenden Außenholzschicht und/oder den Schälrissen der gegenüberliegenden Außenholzschicht angeordnet bzw. ausgerichtet sind.

Im erfindungsgemäßen Fall der Ausbildung der Zwischenschicht als richtungsorientierte Schicht, nämlich als Holzschicht, ist vorgesehen, dass die Materialrichtung, nämlich die Holzfasern senkrecht zu der Längserstreckung der Schälrisse und damit zur Faserrichtung der ersten oder zweiten Außenholzschicht verlaufen. Bevorzugt verläuft die Materialrichtung winklig, insbesondere senkrecht, zu ggf. vorgesehenen Einformungen, insbesondere Einschnitten zumindest einer der Außenholzschichten verlaufen.

Besonders zweckmäßig ist es, wenn die erste und/oder zweite aus Balsa-Furnierholz ausgebildete Außenholzschicht eine Schichtdicke von mehr als 3mm, bevorzugt mehr als 4mm, weiter bevorzugt von mehr als 6mm, noch weiter bevorzugt von mehr als 8mm, ganz besonders bevorzugt von mehr als 10mm aufweist. Bevorzugt ist die Schichtdicke aus einem Wertebereich zwischen etwa 3,5mm und etwa 12mm oder höher gewählt.

Die Zwischenschicht weist bevorzugt eine Dicke aus einem Wertebereich zwischen 0,5mm und 5mm, vorzugsweise zwischen 0,5mm und 4mm auf.

Ganz besonders bevorzugt ist es, wenn der Abstand zwischen der Außenseite der ersten Holzschicht und der Außenseite der zweiten Holzschicht mindestens 8mm, vorzugsweise mindestens 10mm, ganz besonders bevorzugt mindestens 14mm, noch weiter bevorzugt mindestens 16mm beträgt. Besonders bevorzugt ist dieser Abstand aus einem Wertebereich zwischen 8mm und 25mm, insbesondere zwischen 18mm und 30mm, gewählt. Von besonderem Vorteil ist es, wenn der vorerwähnte Abstand der Gesamtdicke des Biegeholzlaminates entspricht, noch weiter bevorzugt bei einem Dreischichtaufbau umfassend die Zwischenschicht und die beiden Außenholzschichten, ggf. mit dazwischen vorgesehenen Kleberschichten.

Im Hinblick auf die konkrete Ausbildung des Biegeholzlaminates gibt es unterschiedliche Möglichkeiten. So ist grundsätzlich ein asymmetrischer Aufbau möglich, bei dem die beiden Außenholzschichten eine unterschiedliche Dicke aufweisen. Besonders bevorzugt ist jedoch ein symmetrischer Aufbau, bei welchem die Zwischenschicht eine Symmetrieachse bildet. Erfindungsgemäß ist vorgesehen, dass eine neutrale Faser des Biegeholzlaminates, insbesondere mittig, in der Zwischenschicht verläuft.

Im Hinblick auf die Materialwahl der Zwischenschicht ist vorgesehen, dass diese aus einem flexiblen Holzfurnier bestehen oder ein derartiges Holzfurnier umfasst, beispielsweise ein Balsaholzfurnier.

Bevorzugt ist es, wenn die Außenholzschichten in gewissen Grenzen flexibel mit der Zwischenschicht verbunden sind, was über die Wahl eines geeigneten Klebers realisiert werden kann. Der Kleber sollte sich dadurch auszeichnen, dass er bei einer maximalen Durchbiegung nicht bricht, was wichtig ist für die gleichmäßige Verformung des Biegeholzlaminates sowie für die Endstabilität eines daraus resultierenden gebogenen Formteils.

Besonders gute Erfahrungen konnten gemacht werden mit einem schäumenden 1-Komponenten Polyurethanklebstoff. Die Verwendung eines aufschäumenden Klebstoffs hat dabei den Vorteil, dass etwaige Dickenschwankungen aufgrund einer vergleichsweise groben Furnieroberfläche ausgeglichen und somit ein vollflächiger Verbund gewährleistet wird. Andere Klebstoffe, die die vorgenannten Bedingungen erfüllen, können ebenfalls eingesetzt werden. Alternativ zu einem schäumenden Klebstoff sind, insbesondere bei vergleichsweise glatten Oberflächen, auch nicht schäumende Kleber einsetzbar, insbesondere auch eine thermoplastische Folie, die bei Erwärmung erweicht.

Erfindungsgemäß ist ein innerer Biegeradius aus einem Wertebereich zwischen 100mm und 250mm gewählt.

Besonders gute Biegeergebnisse bei gleichzeitig geringem Gesamtgewicht des Biegeholzlaminates und in der Folge auch eines daraus hergestellten Formteils ergeben sich, wenn erfindungsgemäß die Dichte der ersten und zweiten Außenholzschicht, gemessen bei einem Restfeuchtegehalt von 12Gew.% bezogen auf das Holzgewicht weniger als 200kg/m³ beträgt und vorzugsweise aus einem Wertebereich zwischen 80kg/ m³ und 165 kg/m³ gewählt ist.

Die Erfindung führt auch auf ein gebogenes Formteil, insbesondere für ein Möbelstück oder als Verkleidungsstück, insbesondere als Schalenstück, umfassend ein, insbesondere in Richtung seiner Dickenerstreckung ein einziges, gebogenes Biegeholzlaminat, welches nach dem Konzept der Erfindung ausgebildet ist. Bevorzugt handelt es sich um ein Biegeholzlaminat mit einem symmetrischen Aufbau, bestehend aus (bevorzugt ausschließlich) zwei äußeren Balsa-Schälfurnierholz-Außenholzschichten und einer dazwischen liegenden Zwischenschicht. Diese ist, wie eingangs erwähnt als eine von einer Kleberschicht unterschiedlichen Schicht, nämlich als, insbesondere flexible, richtungsorientierte Holzschicht ausgebildet, wobei im letztgenannten Fall diese Zwischenschicht bevorzugt mit jeweils einer Kleberschicht mit einer Außenholzschicht verbunden ist. Das gebogene Formteil zeichnet sich weiter dadurch aus, dass auf der Außenseite der ersten Außenholzschicht und/oder auf der Außenseite der zweiten Holzschicht eine, bevorzugt dekorative, Deckschicht vorgesehen ist, die noch weiter bevorzugt das gebogene Formteil versteift. Ganz besonders bevorzugt bildet das nach dem Konzept der Erfindung ausgebildete Biegeholzlaminat einen Kernschichtaufbau, der auf beiden Flächenseiten von mindestens einer, insbesondere ausschließlich einer, Deckschicht umgeben ist, die bevorzugt mit der jeweils benachbarten Außenholzschicht verklebt ist.

Als Deckschichten werden insbesondere eingesetzt: Hartholzfaserplatte, Hartfaserplatte, mitteldichte Faserplatte, Sperrholz, Holzfurnier, Hochdrucklaminat (HPL), Faserverbundwerkstoff, Faserverbundkunststoff (FVK), faserverstärkter Kunststoff (FRP).

Wie erwähnt ist ein weiterer Vorteil von Balsa-Furnierholz ist dessen sehr gute Verformbarkeit und die Fähigkeit, sich an geringste Biegeradien gleichmäßig anpassen zu können. Der erhaltene Materialverbund weist eine geringe Rückstellkraft aufgrund der guten Verformbarkeit des Balsa-Furnierholzes auf und zusätzlich aufgrund der im Vergleich zum Stand der Technik geringeren Schichtanzahl, wodurch es bei Formteilen nicht notwendig ist, mehrere Biegeholzlaminate flächig miteinander zu verkleben.

Ganz besondere bevorzugt ist es, wenn das gebogene Formteil zumindest in einem Abschnitt eine S-förmige Biegeform aufweist.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: ein bereits gebogenes Biegeholzlaminat und
- Fig. 2:: ein aus einem Biegeholzlaminat gemäß Fig. 1 hergestelltes gebogenes Formteil.

In den Figuren sind gleiche Elemente und Elemente mit der gleichen Funktion mit den gleichen Bezugszeichen gekennzeichnet.

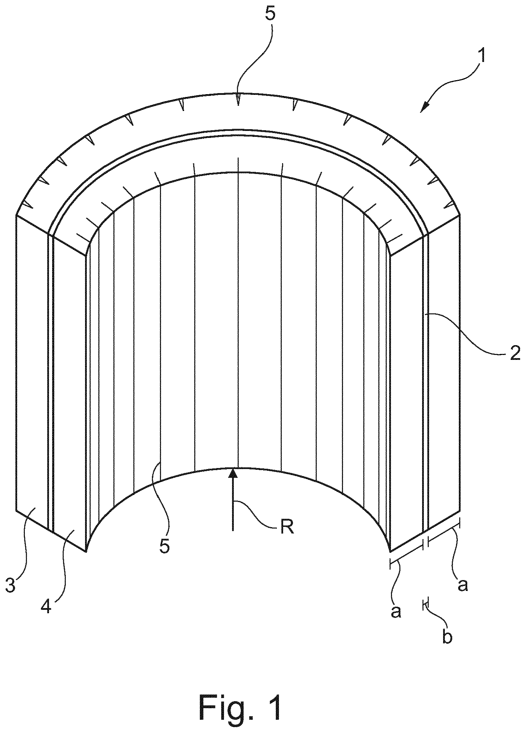

In Fig. 1 ist ein symmetrisch aufgebautes Biegeholzlaminat 1 gezeigt, umfassend drei miteinander verklebte Flächenelemente. Hierbei handelt es sich zum einen um eine mittige, eine Symmetrieachse bildende und mittig eine neutrale Faser aufnehmende Zwischenschicht 2 aus einem flexiblen Holzfurnier. Auf jeder Flächenseite der Zwischenschicht 2 befindet sich eine Außenholzschicht 3, 4, wobei mit dem Bezugszeichen 3 beispielhaft eine erste, als Balsa-Schälfurnierholz ausgebildete, Außenholzschicht und mit dem Bezugszeichen 4 eine ebenfalls als Balsa-Schälfurnierholz ausgebildete Außenholzschicht gekennzeichnet ist.

Die beiden Außenholzschichten 3, 4 sind über jeweils eine nicht eingezeichnete Kleberschicht mit der Zwischenschicht 2 verklebt.
Zu erkennen ist, dass beide Außenholzschichten 3, 4 auf einer äußeren Seite sogenannte Schälrisse 5 aufweisen, die herstellungsbedingt sind und die aus der Furnierholzherstellung resultieren und zwar an der dem Schäl-Messer zugewandten Seite.

Besonders bevorzugt ist die dargestellte Anordnung, bei der die Schälrisse beider Außenholzschichten 3, 4 dieselbe Orientierung aufweisen und sich auf einer jeweiligen Außenseite, d.h. auf einer von der Zwischenschicht 2 abgewandten Seite befinden, so dass das zunächst nicht gebogene, d.h. flächenebene Biegeholzlaminat um eine gedachte Biegeachse biegbar ist, die parallel zur Längserstreckung der Schälrisse 5 verläuft.

Bei diesem Biegen erfolgt eine Kompression des Balsaholzes der inneren Biegeschicht, in dem gezeigten Ausführungsbeispiel der zweiten Außenholzschicht 4, was optimal über die Schälrisse 5 ermöglicht wird. Gleichzeitig werden die Schälrisse 5 der äußeren Biegeschicht, d.h. in dem gezeigten Ausführungsbeispiel der ersten Außenholzschicht 3 gedehnt bzw. aufgeweitet, wodurch in Kombination eine optimale Biegbarkeit resultiert. In dem gezeigten Ausführungsbeispiel ist nur ein innerer Biegeradius R eingezeichnet. Bei dem äußeren Biegeradius müsste der kennzeichnende Pfeil bis zur Außenseite der ersten Außenholzschicht 3 weitergeführt sein.

Bei der Zwischenschicht 2 handelt es sich um eine Holzschicht, beispielsweise eine Balsa-Furnierholz-Schicht, wobei die Faserorientierung der Zwischenschicht 2 und/oder ggf. vorgesehene Schälrisse senkrecht verlaufen zu den Schälrissen der Außenholzschichten 3, 4.

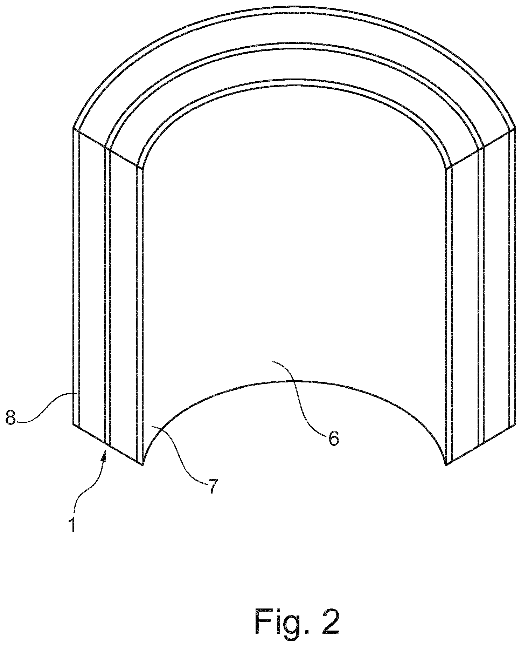

Ein beispielhaft in Fig. 1 dargestelltes, nach der Herstellung in einer Presse zunächst ebenes, d.h. nicht gebogenes Biegeholz, welches durch Kraftbeaufschlagung in die in Fig. 1 dargestellte Biegeform überführbar ist, eignet sich hervorragend zur Herstellung eines beispielhaft in Fig. 2 gezeigten gebogenen Formteils 6, bei welchem das Biegeholzlaminat 1 eine Kernschichtanordnung (Mittenanordnung) bildet, die zwischen zwei Deckschichten 7, 8 aufgenommen ist. Die Verbindung des Biegeholzes 1 und der Deckschichten 7, 8 erfolgt bevorzugt zwischen zwei Formplatten, wobei die innere Formplatte an einer ersten Flächenseite und die zweite Formplatte an einer zweiten Flächenseite anliegt. Es kommen also beispielsweise eine Form und eine Gegenform zum Einsatz, die mit Pressdruck beaufschlagt werden um den Klebevorgang zu optimieren. Alternativ wird der Schichtaufbau verklebt, in Form gebracht und beispielsweise in einem Vakuumsack mit Unterdruck beaufschlagt. Dabei werden die Deckschichten 7, 8 vorzugsweise mit dem Biegeholzlaminat 1 verklebt. Zu erkennen ist, dass das Formteil 6 ein einziges Biegeholzlaminat 1 in Richtung seiner Dickenerstreckung aufweist, was bevorzugt ist. Anders ausgedrückt müssen nicht wie im Stand der Technik mehrere Biegeholzlaminate aufeinander laminiert werden, um die gewünschte Gesamtdicke des Formteils 6 zu erreichen. Aus Übersichtlichkeitsgründen sind die Schälrisse des Biegeholzlaminates 1 bei der Darstellung gemäß Fig. 2 nicht eingezeichnet.

In dem gezeigten Ausführungsbeispiel beträgt die Dickenerstreckung a beider Außenholzschichten 3, 4 jeweils 10mm. Die Zwischenschicht 2 hat eine Dickenerstreckung b von beispielhaft 1mm. Hieraus ergibt sich eine Gesamtdicke des Biegeholzlaminates 1 von 21 mm zuzüglich der dünnen Klebstoffschichten mit einer mittleren Dicke von vorzugsweise weniger als 1 mm, insbesondere zwischen 0,1 mm und 0,5mm.

### Bezugszeichenliste

- 1: Biegeholzlaminat
- 2: Zwischenschicht
- 3: erste Außenholzschicht
- 4: zweite Außenholzschicht
- 5: Schälrisse
- 6: gebogenes Formteil
- 7: Deckschicht
- 8: Deckschicht

- a: Dickenerstreckung - Außenholzschicht
- b: Dickenerstreckung - Zwischenschicht
- R: innerer Biegeradius

## Patentansprüche

1. Biegbares Biegeholzlaminat mit einer, insbesondere eine Mittelschicht bildenden, Zwischenschicht (2), aufweisend eine erste und eine zweite Flächenseite, wobei auf der ersten Flächenseite eine erste Außenholzschicht (3) und auf der zweiten Flächenseite eine zweite Außenholzschicht (4) vorgesehen ist, wobei der Abstand zwischen der Außenseite der ersten Außenholzschicht (3) und die Außenseite der zweiten Außenholzschicht (4) mindestens 8mm beträgt, wobei die erste und die zweite Außenholzschicht (3, 4) aus Balsa-Schälfurnierholz ausgebildet sind, und wobei die Dichte der ersten und der zweiten Außenholzschicht (3, 4) bei einem Restfeuchtegehalt von 12Gew.% bezogen auf die Holzmasse weniger als 200kg/m³ beträgt, und wobei die erste und die zweite Außenholzschicht (3, 4) auf einer Flächenseite Schälrisse (5) aufweist,
**dadurch gekennzeichnet,**
**dass** die erste und die zweite Außenholzschicht (3, 4) derart angeordnet sind, dass die die Schälrisse (5) aufweisende Flächenseite von der Zwischenschicht (2) abgewandt ist, und dass das Biegeholzlaminat mit einem inneren Biegeradius aus einem Wertebereich zwischen 100mm und 250mm biegbar und/oder gebogen ist, und dass die Zwischenschicht als richtungsorientierte Holzschicht ausgebildet ist, und dass eine neutrale Faser des Biegeholzlaminats in der Zwischenschicht verläuft und dass Holzfasern der richtungsorientierten Zwischenschicht senkrecht zur Längserstreckung der Schälrisse der ersten und/oder der zweiten Außenholzschicht (3, 4) verlaufen.

2. Biegeholzlaminat nach Anspruch 1,
**dadurch gekennzeichnet,**
**dass** die Zwischenschicht (2) eine geringere Dickenerstreckung aufweist als die erste und die zweite Außenholzschicht (3, 4).

3. Biegeholzlaminat nach einem der Ansprüche 1 oder 2,
**dadurch gekennzeichnet,**
**dass** die erste und/oder zweite Außenholzschicht (3, 4) auf einer Flächenseite, insbesondere mittels eines Schlitzmessers hergestellte Einformungen, bevorzugt Einschnitte oder Perforationen zum Beeinflussen der Biegeeigenschaften aufweist.

4. Biegeholzlaminat nach einem der vorhergehenden Ansprüche,
**dadurch gekennzeichnet,**
**dass** die erste und/oder die zweite Außenholzschicht (3, 4) eine Schichtdicke von mehr als 3mm, bevorzugt von mehr als 4mm, weiter bevorzugt von mehr als 6mm, noch weiter bevorzugt von mehr als 8mm, ganz besonders bevorzugt mehr als 10mm noch weiter bevorzugt mehr als 12mm, insbesondere aus einem Wertebereich zwischen 3,5mm und 12mm bevorzugt zwischen 8mm und 14mm aufweisen.

5. Biegeholzlaminat nach einem der vorhergehenden Ansprüche,
**dadurch gekennzeichnet,**
**dass** der Abstand zwischen der Außenseite der ersten Außenholzschicht und der Außenseite der zweiten Außenholzschicht, der bevorzugt der Gesamtdicke des Biegeholzlaminates (1) entspricht, mindestens 10mm, bevorzugt mindestens 14mm, ganz besonders bevorzugt mindestens 16mm beträgt und ganz besonders bevorzugt aus einem Wertebereich zwischen 8 und 25mm, bevorzugt zwischen 18mm und 30mm gewählt ist.

6. Biegeholzlaminat nach einem der vorhergehenden Ansprüche,
**dadurch gekennzeichnet,**
**dass** die Zwischenschicht (2) eine Dicke aus einem Wertebereich zwischen 0,3mm und 5mm, vorzugsweise zwischen 0,5mm und 4mm aufweist.

7. Biegeholzlaminat nach einem der vorhergehenden Ansprüche,
**dadurch gekennzeichnet,**
**dass** zwischen der Zwischenschicht (2) und den Außenholzschichten (3, 4) jeweils eine, insbesondere aufgeschäumte, bevorzugt flexible Kleberschicht, insbesondere ein, bevorzugt 1-Komponenten, Polyurethan-klebstoff, oder eine thermoplastische Kunststofffolie vorgesehen ist.

8. Biegeholzlaminat nach einem der vorhergehenden Ansprüche,
**dadurch gekennzeichnet,**
**dass** die Dichte der ersten und/oder zweiten Außenholzschicht (3, 4) bei einem Restfeuchtegehalt von 12Gew.% bezogen auf die Holzmasse aus einem Wertebereich zwischen 80kg/m³ und 165kg/m³ gewählt ist.

9. Biegeholzlaminat nach einem der vorhergehenden Ansprüchen,
**dadurch gekennzeichnet,**
**dass** dieses aus den beiden Außenholzschichten (3, 4) und der Zwischenschicht (2) mit dazwischen angeordneten Kleberschichten besteht.

10. Gebogenes Formteil, insbesondere für ein Möbelstück oder ein beispielsweise schalenförmiges Verkleidungsstück, umfassend ein, insbesondere ein einziges, gebogenes Biegeholzlaminat (1) nach einem der vorhergehenden Ansprüche, wobei auf der Außenseite des ersten und/oder zweiten Außenholzschicht (3, 4) eine, bevorzugt dekorative, Deckschicht (7, 8) vorgesehen ist.

11. Formteil nach Anspruch 10,
**dadurch gekennzeichnet,**
**dass** die Deckschicht (7, 8) das Formteil aussteifend ausgebildet und angeordnet ist.

12. Formteil nach einem der Ansprüche 10 oder 11,
**dadurch gekennzeichnet,**
**dass** die Deckschicht (7, 8) umfasst oder ausgebildet ist aus einem Material der Gruppe: Hartholzfaser, Hartfaserplatte, mitteldichte Faserplatte, Holzfurnier, Sperrholz, Hochdrucklaminat (HPL), Faserverbundwerkstoff (FVK), faserverstärkter Kunststoff (FRP).

## Claims

1. A bending plywood with an intermediate layer (2), in particular forming a central layer, comprising a first and a second surface side, wherein on the first surface side a first outer timber layer (3) and on the second surface side a second outer timber layer (4) is provided, wherein the distance between the outer side of the first outer timber layer (3) and the outer side of the second outer timber layer (4) is at least 8 mm, wherein the first and the second outer timber layers (3, 4) are formed from peeled balsawood veneer, and wherein the density of the first and the second outer timber layers (3, 4), with a residual moisture content of 12 % by weight with respect to the timber mass, is less than 200 kg/m³, and wherein the first and the second outer timber layers (3,4) have lathe checks (5) on one surface side,
**characterized in that**
the first and the second outer timber layers (3, 4) are arranged such that the surface side having the lathe checks (5) is facing away from the intermediate layer (2), and **in that** the bending plywood can be curved and/or is curved with an inner bending radius from a value range of between 100 mm and 250 mm, and **in that** the intermediate layer is formed as a directional timber layer, and **in that** a neutral fiber of the bending plywood runs in the intermediate layer and **in that** timber fibers of the directional intermediate layer run perpendicularly to the longitudinal extent of the lathe checks of the first and/or the second outer timber layers (3, 4).

2. The bending plywood according to claim 1,
**characterized in that**
the intermediate layer (2) has a smaller thickness than the first and the second outer timber layers (3, 4).

3. The bending plywood according to one of claims 1 or 2,
**characterized in that**
the first and/or second outer timber layer (3, 4) has on one surface side preferably indentations or perforations, in particular manufactured by means of a slitting blade, for influencing the bending properties.

4. The bending plywood according to one of the preceding claims,
**characterized in that**
the first and/or the second outer timber layer (3, 4) have a layer thickness of more than 3 mm, preferably more than 4 mm, further preferably more than 6 mm, even further preferably of more than 8 mm, very particularly preferred of more than 10 mm, even more preferred of more than 12 mm, in particular from a value range of between 3.5 mm and 12 mm, preferably between 8 mm and 14 mm.

5. The bending plywood according to one of the preceding claims,
**characterized in that**
the distance between the outer side of the first outer timber layer and the outer side of the second outer timber layer, which preferably corresponds to the total thickness of the bending plywood (1), is at least 10 mm, preferably at least 14 mm, very preferably at least 16 mm, and particularly preferably is selected from a value range s of between 8 mm and 25 mm, preferably between 18 mm and 30 mm.

6. The bending plywood according to one of the preceding claims,
**characterized in that**
the intermediate layer (2) has a thickness from a value range of between 0.3 mm and 5 mm, preferably between 0,5 mm and 4 mm.

7. The bending plywood according to one of the preceding claims,
**characterized in that**
between the intermediate layer (2) and the outer timber layers (3, 4) in each case an adhesive layer is provided, this layer in particular foamed, preferably flexible, in particular a one-component polyurethane adhesive, or a thermaplastic film.

8. The bending plywood according to one of the preceding claims,
**characterized in that**
the density of the first and/or second outer timber layer (3, 4), with a residual moisture content of 12% by weight with respect to the timber mass, is selected from a value range of between 80 kg/m³ and 165 kg/m³.

9. The bending plywood according to one of the preceding claims, **characterized in that**
the laminate consists of the two outer timber layers (3, 4) and the intermediate layer (2) with adhesive layers arranged in between.

10. A curved formed part, in particular for an item of furniture or a shell-shaped item of cladding, comprising a, in particular a single, curved bending plywood (1), according to one of the preceding claims, wherein on the outer side of the first and/or second outer timber layer (3, 4) a, preferably decorative, covering layer (7, 8) is provided.

11. The formed part according to claim 10,
**characterized in that**
the covering layer (7, 8) is designed and arranged in a manner stiffening the component.

12. The formed part according to one of claims 10 or 11,
**characterized in that**
the covering layer (7, 8) comprises or is formed from a material of the group: hardwood fiber, hard fiberboard, medium density fiberboard, timber veneer, plywood, high-pressure laminate (HPL), fiber composite material, fiber-reinforced plastic (FRP).

## Revendications

1. Contreplaqué cintrable présentant une couche intermédiaire (2) formant en particulier une couche centrale, présentant une première et une deuxième face, une couche de bois externe (3) étant disposée sur la première face et une deuxième couche de bois externe (4) étant disposée sur la deuxième face, la distance entre le côté externe de la première couche de bois externe (3) et le côté externe de la deuxième couche de bois externe (4) étant d'au moins 8 mm, la première et la deuxième couche de bois externe (3, 4) étant en bois de placage de balsa épluché et la densité de la première et de la deuxième couche de bois externe (3, 4), à une teneur résiduelle en humidité de 12% en poids par rapport à la masse de bois, étant inférieure à 200 kg/m³ et la première et la deuxième couche de bois externe (3, 4) présentant sur une face des fissures d'épluchage (5), **caractérisé en ce que** la première et la deuxième couche de bois externe (3, 4) sont disposées de manière telle que la face présentant les fissures d'épluchage (5) se situe à l'opposé de la couche intermédiaire (2) et **en ce que** le contreplaqué de cintrage est cintrable et/ou cintré à un rayon de courbure interne situé dans la plage de valeurs entre 100 mm et 250 mm et **en ce que** la couche intermédiaire est conçue comme une couche de bois à direction orientée et **en ce qu'**une fibre neutre du contreplaqué de cintrage s'étend dans la couche intermédiaire et **en ce que** des fibres de bois de la couche intermédiaire à direction orientée s'étendent perpendiculairement à l'étendue longitudinale des fissures d'épluchage de la première et/ou de la deuxième couche de bois externe (3, 4).

2. Contreplaqué de cintrage selon la revendication 1, **caractérisé en ce que** la couche intermédiaire (2) présente une étendue d'épaisseur inférieure à celle de la première et de la deuxième couche de bois externe (3, 4).

3. Contreplaqué de cintrage selon l'une quelconque des revendications 1 ou 2, **caractérisé en ce que** la première et/ou la deuxième couche de bois externe (3, 4) présente(nt) des creux, en particulier réalisés au moyen d'un couteau à fendre, sur une face, de préférence des encoches ou des perforations pour influencer les propriétés de flexion.

4. Contreplaqué de cintrage selon l'une quelconque des revendications précédentes, **caractérisé en ce que** la première et/ou la deuxième couche de bois externe (3, 4) présente(nt) une épaisseur de couche supérieure à 3 mm, de préférence supérieure à 4 mm, plus préférablement supérieure à 6 mm, encore plus préférablement supérieure à 8 mm, de manière tout particulièrement préférée supérieure à 10 mm, encore plus préférablement supérieure à 12 mm, en particulier de la plage de valeurs entre 3,5 mm et 12 mm, de préférence entre 8 mm et 14 mm.

5. Contreplaqué de cintrage selon l'une quelconque des revendications précédentes, **caractérisé en ce que** la distance entre le côté externe de la première couche de bois externe et le côté externe de la deuxième couche de bois externe, qui correspond de préférence à l'épaisseur totale du contreplaqué de cintrage (1) est d'au moins 10 mm, de préférence d'au moins 14 mm, de manière tout particulièrement préférée d'au moins 16 mm et est choisie de manière tout particulièrement préférée dans la plage de valeurs entre 8 et 25 mm, de préférence entre 18 mm et 30 mm.

6. Contreplaqué de cintrage selon l'une quelconque des revendications précédentes, **caractérisé en ce que** la couche intermédiaire (2) présente une épaisseur de la plage de valeurs entre 0,3 mm et 5 mm, de préférence entre 0,5 mm et 4 mm.

7. Contreplaqué de cintrage selon l'une quelconque des revendications précédentes, **caractérisé en ce qu'**à chaque fois une couche adhésive, en particulier moussée, de préférence souple, en particulier un adhésif de polyuréthane, de préférence à 1 composant, ou une feuille en matériau synthétique thermoplastique est disposée entre la couche intermédiaire (2) et les couches de bois externes (3, 4).

8. Contreplaqué de cintrage selon l'une quelconque des revendications précédentes, **caractérisé en ce que** la densité de la première et/ou de la deuxième couche de bois externe (3, 4), à une teneur résiduelle en humidité de 12% en poids par rapport à la masse de bois, est choisie dans une plage de valeurs entre 80 kg/m³ et 165 kg/m³.

9. Contreplaqué de cintrage selon l'une quelconque des revendications précédentes, **caractérisé en ce qu'**il est constitué par les deux couches de bois externes (3, 4) et la couche intermédiaire (2) avec des couches adhésives disposées entre celles-ci.

10. Pièce façonnée cintrée, en particulier pour un meuble ou par exemple une pièce d'habillage en forme de coquille, comprenant un, en particulier un seul, contreplaqué de cintrage (1) cintré selon l'une quelconque des revendications précédentes, une couche de recouvrement (7, 8), de préférence décorative, étant disposée sur le côté externe de la première et/ou de la deuxième couche de bois externe (3, 4).

11. Pièce façonnée selon la revendication 10, **caractérisée en ce que** la couche de recouvrement (7, 8) est conçue et disposée de manière à rigidifier la pièce façonnée.

12. Pièce façonnée selon l'une quelconque des revendications 10 ou 11, **caractérisée en ce que** la couche de recouvrement (7, 8) comprend ou est réalisée en un matériau du groupe : fibres en bois dur, panneau de fibres dur, panneau de fibres de densité moyenne, placage de bois, contreplaqué, stratifié haute pression (HPL), matériau composite fibreux (FVK), matériau synthétique renforcé par des fibres (FRP).
